# EUROPÄISCHE PATENTSCHRIFT

(11) **EP 0 721 735 B1**
(45) Veröffentlichungstag und Bekanntmachung des Hinweises auf die Patenterteilung: **04.08.1999**
(21) Anmeldenummer: 95119456.2
(22) Anmeldetag: 11.12.1995
(51) Int. Cl.: A01N 25/34, A01N 25/24

(54) **Schädlingsbekämpfungsmittel**
Pesticide
Pesticide

(30) Priorität: 23.12.1994 DE 4446344
(43) Veröffentlichungstag der Anmeldung: 17.07.1996
(73) Patentinhaber: BAYER AG, 51368 Leverkusen (DE)
(72) Erfinder: Lösel, Peter Dr., D-40789 Monheim (DE); Penners, Gunther, Dr., D-51373 Leverkusen (DE); Weissmüller, Joachim, Dr., D-40789 Monheim (DE)

(56) Entgegenhaltungen:
- EP-A- 0 256 549
- EP-A- 0 257 415
- EP-A- 0 376 888
- GB-A- 999 067
- GB-A- 2 018 593
- GB-A- 2 138 291
- US-A- 4 456 587

## Beschreibung

Die vorliegende Erfindung betrifft neue Mittel zur Bekämpfung schädlicher Insekten und Vertretern der Ordnung Acarina, ein Verfahren zur Herstellung dieser Mittel und deren Verwendung in der Landwirtschaft, der Forstwirtschaft und im Gartenbau.

Bei der Bekämpfung von tierischen Pflanzenschädlingen mit Hilfe von Pestiziden ist man bestrebt, eine Kontamination der zu schützenden Pflanzen und ihrer Umgebung einschließlich des Bodens, auf dem sie wachsen, zu minimieren. Außerdem sollen Nützlinge und Warmblüter durch die pestiziden Wirkstoffe möglichst wenig beeinträchtigt werden. Im Gegensatz dazu sollen aber die zu bekämpfenden Schädlinge den pestiziden Wirkstoffen möglichst intensiv ausgesetzt werden, damit die Schädlinge die Wirkstoffe durch Kontakt, als Fraßgifte oder über die Gasphase in ausreichender Menge aufnehmen können.

Die genannten Bedingungen lassen sich bei der Bekämpfüng von Insekten zum Beispiel dadurch erfüllen, daß man Signalsubstanzen, wie Pheromone, Kairomone oder Lockstoffe, die auf Insekten anziehend wirken, mit insektiziden Wirkstoffen kombiniert und die entstehenden Mischungen nicht flächendeckend, sondern nur eng lokal begrenzt an einzelnen Stellen in den zu schützenden Bestand ausbringt. Da die Signalsubstanzen an den behandelten Orten freigesetzt werden, bewegen sich die Schädlinge dorthin, kontaminieren sich mit den pestiziden Wirkstoffen und werden abgetötet.

Damit derartige Mittel eine ausreichend lang andauernde Wirkung entfalten, müssen die aktiven Komponenten in den betreffenden Formulierungen so enthalten sein, daß sie einerseits gegen Umwelteinflüsse, wie Licht, Sauerstoff und Witterung, geschützt sind, andererseits aber auch kontrolliert freigesetzt werden. Außerdem muß gewährleistet sein, daß die Insekten nach Berühren der Formulierung eine zur Abtötung genügende Menge an Wirkstoff aufnehmen.

Es sind bereits zahlreiche Zubereitungen bekannt geworden, denen das geschilderte Prinzip zur Bekämpfung tierischer Schädlinge zugrunde liegt.

So geht aus der EP-A 0 055 475 hervor, daß sich männliche Insekten der Spezies Cossus cossus mit Hilfe von (Z)-5-Dodecen-1-yl-acetat gegebenenfalls im Gemisch mit (Z)-3-Decen-1-yl-acetat, (Z)-3-Dodecen-1-yl-acetat und/oder (E)-5-Dodecen-1-yl-acetat bekämpfen lassen. Der Lockstoff bzw. Gemische der aktiven Komponenten werden dabei in Solventien mit niedrigem Dampfdruck ausgebracht oder gegebenenfalls auch im Gemisch mit Antoxidantien und UV-Stabilisatoren auf inerten Feststoffen adsorbiert angewandt. Weiterhin werden in der GB-A 2 064 323 Insektenbekämpfungsmittel auf Basis von Pheromonen beschrieben, in denen die Signalsubstanzen sowie UV-Stabilisatoren und zusätzliche Additive auf einer Kombination aus absorbierenden und adsorbierenden Feststoffen fixiert sind. Nachteilig an diesen Zubereitungen ist jedoch, daß sie gegen Witterungseinflüsse nur relativ wenig widerstandsfähig sind und die Wirkstoffe deshalb schon nach verhältnismäßig kurzer Zeit zersetzt oder ausgewaschen werden.

Ferner ist es bereits bekannt, Kombinationen aus Lockstoffen und Insektiziden in mikroverkapselter Form oder in wasserlöslichen Polymeren gebunden zur Schädlingsbekämpfung einzusetzen (vgl. JP-A 59-7101 und "Advances in Pesticide Formulation Technology" 1984, Kapitel 11, Seiten 151-162). Die Wirkung derartiger Formulierungen ist aber nicht immer ausreichend, weil die freigresetzte Wirkstoffdosis häufig nicht genügt, um eine Abtötung der Schädlinge zu erzielen.

Gemäß GB-A 2 141 932 lassen sich Zubereitungen, in denen Pheromone gegebenenfalls im Gemisch mit UV-Absorbern und anderen Additiven in flüssigen oder halbflüssigen, wasserbeständigen und gegen UV-Strahlung schützenden Polymeren enthalten sind, als Schädlingsbekämpfungsmittel verwenden. In diesen Formulierungen bleiben die aktiven Komponenten zwar über einen ausreichend langen Zeitraum stabil, die nach außen diffundierende Menge an Wirkstoff gewährleistet aber nicht immer einen ausreichenden Wirkungsgrad. Außerdem treten beim Einsatz solcher Mittel, die auch nach der Ausbringung ihre flüssige Konsistenz beibehalten, in der Praxis manchmal Probleme auf.

Schließlich ist der EP-A 0 376 888 zu entnehmen, daß auch solche Formulierungen zur Schädlingsbekämpfung geeignet sind, die neben Insektiziden und Lockstoffen sowie üblichen Zusatzstoffen zum größten Teil aus einem oder mehreren permanent flüssigen UV-Absorbern bestehen und in viskoser, auch auf Dauer nicht aushärtender Form vorliegen. Die Wirksamkeit dieser Zubereitungen ist gut, aber die Anwendung in der Praxis wirft Probleme auf. Wenn zum Beispiel die behandelte Kulturfläche regelmäßig eine weitergehende manuelle Bearbeitung erfordert, wie es bei Stammobst-Kulturen und im Weinbau der Fall ist, so läßt sich eine Kontamination des Anwenders mit Wirkstoff in den behandelten Beständen kaum vermeiden. Außerdem können Umwelteinflüsse eine unerwünschte breite Verteilung der permanent flüssigen Zubereitungen über die gesamte Anbaufläche verursachen.

Es wurden nun neue Schädlingsbekämpfungsmittel gefunden, die
- mindestens einen pestiziden Wirkstoff,
- mindestens eine Signalsubstanz,
- mindestens einen flüssigen, mit Wasser nur wenig mischbaren UV-Absorber,
- mindestens ein aushärtendes Polymer, das nach dem Trocknen der Formulierung Schwammstruktur aufweist oder einen porösen Film bildet,
- mindestens eine oberflächenaktive Substanz und
- gegebenenfalls Zusatzstoffe
enthalten und nach der Applikation trocknen und aushärten.

Weiterhin wurde gefunden, daß sich erfindungsgemäße Mittel herstellen lassen, indem man
a) mindestens einen pestiziden Wirkstoff, mindestens eine Signalsubstanz, mindestens einen flüssigen, mit Wasser nur wenig mischbaren UV-Absorber und gegebenenfalls Zusatzstoffe vermischt,
b) das dabei entstehende Gemisch in einer Lösung aus mindestens einer oberflächenaktiven Substanz und Wasser dispergiert und
c) die entstehende Emulsion mit einer Lösung oder Dispersion von mindestens einem aushärtenden Polymer, das nach dem Trocknen der Formulierung Schwammstruktur aufweist oder einen porösen Film bildet, in Wasser sowie gegebenenfalls mit Zusatzstoffen versetzt.

Schließlich wurde gefunden, daß sich die erfindungsgemäßen Mittel sehr gut zur Bekämpfung schädlicher Insekten und unerwünschter Vertreter der Ordnung Acarina in der Landwirtschaft, der Forstwirtschaft und im Gartenbau verwenden lassen.

Es ist als äußerst überraschend zu bezeichnen, daß die erfindungsgemäßen, nach der Applikation aushärtenden Mittel sehr gut für den angegebenen Zweck geeignet sind. Im Hinblick auf den vorbeschriebenen Stand der Technik war nämlich davon auszugehen, daß die zu bekämpfenden Schädlinge an derartigen Zubereitungen, die sich nach der Anwendung verfestigen, nicht genügend Wirkstoff aufnehmen, um abgetötet zu werden. Im Gegensatz zu den Erwartungen zeigen die erfindungsgemäßen Mittel jedoch eine bessere oder zumindest ebenso gute Wirksamkeit wie ähnlich zusammengesetzte, vorbekannte Formulierungen, die nach der Ausbringung viskos bleiben.

Die erfindungsgemäßen Mittel zeichnen sich durch eine Reihe von Vorteilen aus. So besitzen diese Zubereitungen auch bei ungünstigen Witterungsverhältnissen eine sehr gute Stabilität. Sie ermöglichen ferner eine gezielte, äußerst effektive und umweltschonende Schädlingsbekämpfung über einen längeren Zeitraum. Da die erfindungsgemäßen Mittel sich nach ihrer Ausbringung verfestigen, besteht außerdem praktisch keine Gefahr, daß sich Personen, die in den behandelten Beständen arbeiten, mit pestiziden Wirkstoffen kontaminieren. Schließlich bleiben die aushärtenden Mittel an den Stellen haften, auf die sie appliziert wurden. Eine unerwünschte breite Verteilung durch Umwelteinflüsse tritt nicht ein.

Die erfindungsgemäßen Mittel enthalten einen oder mehrere pestizide Wirkstoffe. Hierunter sind alle üblichen, zur Bekämpfung von schädlichen Insekten und unerwünschten Vertretern der Ordnung Acarina geeigneten Substanzen zu verstehen. Vorzugsweise in Betracht kommen Carbamate, organische Phosphor-Verbindungen, Nitrophenole und deren Derivate, Nitromethylene, Nicotinoide, Formamidine, Harnstoffe, Phenylbenzoylharnstoffe, Pyrethroide, chlorierte Kohlenwasserstoffe und Bazillus thuringensis-Präparate. Als Beispiele seien die folgenden Stoffe genannt:
Abamectin, AC 303 630, Acephat, Acrinathrin, Alanycarb, Aldicarb, Alphamethrin, Amitraz, Avermectin, AZ 60541, Azadirachtin, Azinphos A, Azinphos M, Azocyclotin,
Bacillus thuringiensis, Bendiocarb, Benfuracarb, Bensultap, Betacyfluthrin, Bifenthrin, BPMC, Brofenprox, Bromophos A, Bufencarb, Buprofezin, Butocarboxin, Butylpyridaben,
Cadusafos, Carbaryl, Carbofuran, Carbophenothion, Carbosulfan, Cartap, CGA 157 419, CGA 184699, Chloethocarb, Chlorethoxyfos, Chlorfenvinphos, Chlorfluazuron, Chlormephos, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton M, Demeton S, Demeton-S-methyl, Diafenthiuron, Diazinon, Dichlofenthion, Dichlorvos, Dicliphos, Dicrotophos, Diethion, Diflubenzuron, Dimethoat,
Dimethylvinphos, Dioxathion, Disulfoton,
Edifenphos, Emamectin, Esfenvalerat, Ethiofencarb, Ethion, Ethofenprox, Ethoprophos, Etrimphos,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Flucycloxuron, Flucythrinat, Flufenoxuron, Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivermectin, Lambda-cyhalothrin, Lufenuron,
Malathion, Mecarbam, Mervinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, NI 25, Nitenpyram
Omethoat, Oxamyl, Oxydemethon M, Oxydeprofos,
Parathion A, Parathion M, Permethrin, Phenthoat, Phorat, Phosalon, Phosmet, Phosphamidon, Phoxim, Pirimicarb, Pirimiphos M, Pirimiphos A, Profenofos, Promecarb, Propaphos, Propoxur, Prothiofos, Prothoat, Pymetrozin, Pyrachlophos, Pyridaphenthion, Pyresmethrin, Pyrethrum, Pyridaben, Pyrimidifen, Pyriproxifen, Quinalphos,
RH 5992,
Salithion, Sebufos, Silafluofen, Sulfotep, Sulprofos,
Tebufenozid, Tebufenpyrad, Tebupirimiphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb, Transfluthrin, Vamidothion, XMC, Xylylcarb, Zetamethrin.

Als Signalsubstanzen können in den erfindungsgemäßen Mitteln alle üblichen Stoffe enthalten sein, die auf die zu bekämpfenden Schädlinge anziehend wirken und deren Verhalten ändern. Vorzugsweise in Frage kommende Signalsubstanzen sind Pheromone, Kairomone und Lockstoffe. Als Beispiele für derartige Stoffe seien die folgenden Substanzen genannt:
Z-5-Decenylacetat, Dodecanylacetat, Z-7-Dodecenylacetat, E-7-Dodecenylacetat, Z-8-Dodecenylacetat, E-8-Dodecenylacetat, Z-9-Dodecenylacetat, E-9-Dodecenylacetat, E-10-Dodecenylacetat, 11-Dodecenylacetat, Z-9, 11-Dodecadienylacetat, E-9, 11-Dodecadienylacetat, Z-11-Tridecenvlacetat, E-11-Tridecenylacetat, Tetradecenylacetat, E-7-Tetradecenylacetat, Z-8-Tetradecenylacetat, E-8-Tetradecenylacetat, Z-9-Tetradecenylacetat, E-9-Tetradecenylacetat, Z-10-Tetradecenylacetat, E-10-Tetradecenylacetat, Z-11-Tetradecenylacetat, E-11-Tetradecenylacetat, Z-12-Pentadecenylacetat, E-12-Pentadecenylacetat, Hexadecanylacetat, Z-7-Hexadecenylacetat, Z-11-Hexadecenylacetat, E-11-Hexadecenylacetat, Octadecanylacetat, E,Z-7,9-Dodecadienylacetat, Z,E-7,9-Dodecadienylacetat, E,E-7,9-Dodecadienylacetat, Z,Z-7,9-Dodecadienylacetat, E,E-8,10-Dodecadienylacetat, E,Z-9,12-Dodecadienylacetat, E,Z-4,7-Tridecadienylacetat, 4-Methoxy-cinnamaldehyd, β-Ionon, Estragol, Eugenol, Indol, 8-Methyl-2-decyl-propanoat, E,E-9,11-Tetradecadienylacetat, Z,Z-9,12-Tetradecadienylacetat, Z,Z-7,11-Hexadecadienylacetat, E,Z-7,11-Hexadecadienylacetat, Z,E-7,11-Hexadecadienylacetat, E,E-7,11-Hexadecadienylacetat, Z,E-3,13-Octadecadienylacetat, E,Z-3,13-Octadecadienylacetat, E,E-3,13-Octadecadienylacetat, Aethanol, Hexanol, Heptanol, Octanol, Decanol, Z-6-Nonenol, E-6-Nonenol, Dodecanol, 11-Dodecenol, Z-7-Dodecenol, E-7-Dodecenol, Z-8-Dodecenol, E-8-Dodecenol, E-9-Dodecenol, Z-9-Dodecenol, E-9,11-Dodecadienol, Z-9,11-Dodecadienol, Z,E-5,7-Dodecadienol, E,E-5,7-Dodecadienol, E,E-8,10-Dodecadienol, E,Z-8,10-Dodecadienol, Z,Z-8,10-Dodecadienol, Z,E-8,10-Dodecadienol, E,Z-7,9-Dodecadienol, Z,Z-7,9-Dodecadienol, E-5-Tetradecenol, Z-8-Tetradecenol, Z-9-Tetradecenol, E-9-Tetradecenol, Z-10-Tetradecenol, Z-11-Tetradecenol, E-11-Tetradecenol, Z-11-Hexadecenol, Z,E-9,11-Tetradecadienol, Z,E-9,12-Tetradecadienol, Z,Z-9,12-Tetradecadienol, Z,Z-10,12-Tetradecadienol, Z,Z-7,11-Hexadecadienol, Z,E-7,11-Hexadecadienol, (E)-14-Methyl-8-Hexadecen-1-ol, (Z)-14-Methyl-8-Hexadecen-1-ol, E,E-10,12-Hexadecadienol, E,Z-10,12-Hexadecadienol, Dodecanal, Z-9-Dodecenal, Tetradecanal, Z-7-Tetradecenal, Z-9-Tetradecenal, Z-11-Tetradecenal, E-11-Tetradecenal, E-11,13-Tetradecadienal, E,E-8,10-Tetradecadienal, Z,E-9,11-Tetradecadienal, Z,E-9,12-Tetradecadienal, Hexadecanal, Z-8-Hexadecenal, Z-9-Hexadecenal, Z-10-Hexadecenal, E-10-Hexadecenal, Z-11-Hexadecenal, E-11-Hexadecenal, Z-12-Hexadecenal, Z-13-Hexadecenal, (Z)-14-Methyl-8-Hexadecenal, (E)-14-Methyl-8-Hexadecenal, Z,Z-7,11-Hexadecadienal, Z,E-7,11-Hexadecadienal, Z,E-9,11-Hexadecadienal, E,E-10,12-Hexadecadienal, E,Z-10,12-Hexadecadienal, Z,E-10,12-Hexadecadienal, Z,Z-10,12-Hexadecadienal, Z,Z-11,13-Hexadecadienal, Octadecanal, Z-11-Octadecenal, E-13-Octadecenal, Z-13-Octadecenal, Z-5-Decenyl-3-methyl-butanoat Disparlure: (+) cis-7,8-Epoxy-2-methyloctadecan, Seudenol: 3-Methyl-2-cyclohexen-1-ol, Sulcatol: 6-Methyl-5-hepten-2-ol, Ipsenol: 2-Methyl-6-methylen-7-octen-4-ol, Ipsdienol: 2-Methyl-6-methylen-2,7-octadien-4-ol, Grandlure I: cis-2-Isopropenyl-1-methylcyclobutanethanol, Grandlure II: Z-3,3-Dimethyl-1-cyclohexanethanol, Grandlure III: Z-3,3-Dimethyl-1-cyclohexanacetaldehyd, Grandlure IV: E-3,3-Dimethyl-1-cyclohexanacetaldehyd, cis-2-Verbenol: cis-4,6,6-Trimethylbicyclo[3,1,1]hept-3-en-2-ol cucurbitacin, 2-Methyl-3-buten-2-ol, 4-Methyl-3-heptanol, Cucurbitacin, 2-Methyl-3-buten-2-ol, 4-Methyl-3-heptanol, α-Pinen: 2,6,6-Trimethylbicyclo[3,1,1]hept-2-en, α-Caryophyllen: 4,11,11-Trimethyl-8-methylenbicyclo[7,2,0]undecan, Z-9-Tricosen, α-Multistriatin 2(2-endo, 4-endo)-5-Ethyl-2,4-dimethyl-6,8-dioxabicyclo[3,2,1]octan, Methyleugenol: 1,2-Dimethoxy-4-(2-propenyl)phenol, Lineatin: 3,3,7-Trimethyl-2,9-dioxatricyclo[3,3,1,0]nonan, Chalcogran: 2-Aethyl-1,6-dioxaspiro[4,4]nonan, Frontalin: 1,5-Dimethyl-6,8-dioxabicyclo[3,2,1]octan, endo-Brevicomin: endo-7-Ethyl-5-methyl-6,8-dioxabicyclo[3,2,1]octan, exo-Brevicomin: exo-7-Ethyl-5-methyl-6,8-dioxabicyclo[3,2,1]octan, (Z)-5-(1-Decenyl)-dihydro-2-(3H)-furanon, Farnesol 3,7-, 11-Trimethyl-2,6,10-dodecatrien-1-ol, Nerolidol 3,7-, 11-Trimethyl-1,6,10-dodecatrien-3-ol, 3-Methyl,6-(1-methylethenyl)-9-decen-1-ol-acetat, (Z)-3-Methyl-6-(1-methylethenyl)-3,9-decadien-1-ol-acetat, (E)-3,9-Methyl-6-(1-methylethenyl)-5,8-decadien-1-ol-acetat, 3-Methylen-7-methyl-octen-1-ol-propionat, (Z)-3,7-Dimethyl-2,7-octadien-1-ol-propionat, (Z)-3,9-Dimethyl-6-(1-methylethenyl)-3,9-decadien-1-ol-propionat.

Die erfindungsgemäßen Mittel enthalten mindestens einen flüssigen, mit Wasser nur wenig mischbaren UV-Absorber. Hierunter sind Substanzen zu verstehen, die in der Lage sind, UV-Licht zu absorbieren, vorzugsweise UV-Strahlung aus dem Sonnenlicht im Wellenlängenbereich von 270 bis 400 nm. Vorzugsweise in Betracht kommen flüssige UV-Absorber, wie
- 2-(2-Hydroxyphenyl)-benztriazole der Formel 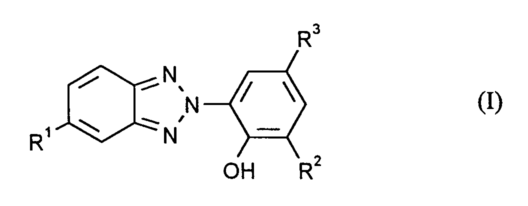 in welcher
   - R¹: für Wasserstoff oder Chlor steht,
   - R²: für Wasserstoff, Alkyl, Phenylalkyl oder Phenyl steht und
   - R³: für Alkyl, Phenylalkyl, Phenyl oder -(CH₂)₂-COO-Alkyl steht,
- 2-Hydroxy-4-alkoxy-benzophenone der Formel 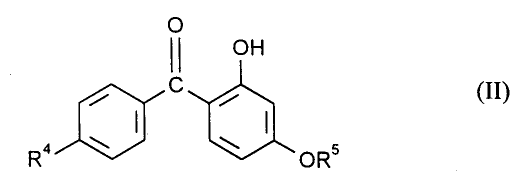 in welcher
   - R⁴: für Wasserstoff, Alkyl oder Alkoxy steht und
   - R⁵: für Alkyl, vorzugsweise für Methyl, Isooctyl oder Dodecyl steht,
- Oxalanilide der Formel 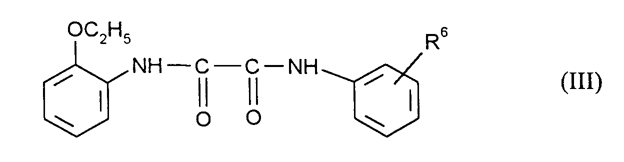 in welcher
   - R⁷: für Alkyl steht,
- Zimtsäure-Derivate der Formeln 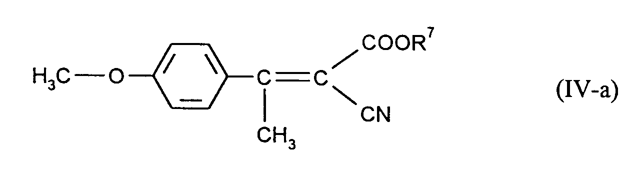 in welcher
   - R⁷: für Alkyl, vorzugsweise für n-Butyl steht, oder 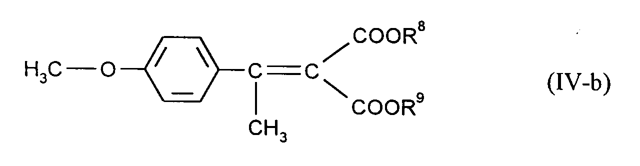 in welcher
   - R⁸ und R⁹: für Alkyl stehen, oder 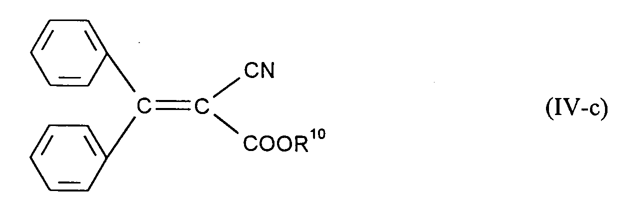 in welcher
   - R¹⁰: für Alkyl, vorzugsweise für Butyl oder den Rest 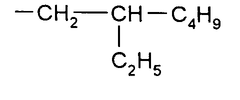 steht,
   und
- Triazin-Derivate der Formel 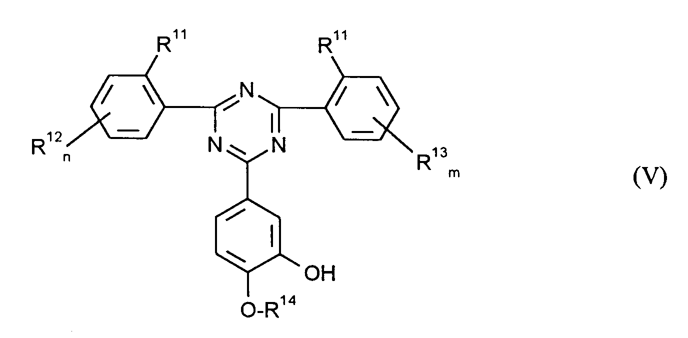 in welcher
   - R¹¹: für Wasserstoff oder Hydroxy steht,
   - R¹²: für Alkyl mit 1 bis 18 Kohlenstoffatomen steht,
   - R¹³: für Alkyl mit 1 bis 18 Kohlenstoffatomen oder Alkoxy mit 1 bis 18 Kohlenstoffatomen steht,
   - R¹⁴: für Alkyl mit 1 bis 18 Kohlenstoffatomen steht und
   - m und n: für die Zahlen 0, 1 oder 2 stehen.

Als Beispiele für 2-(2-Hydroxyphenyl)-benztriazole der Formel (I) seien die in der folgenden Tabelle 1 aufgeführten Stoffe genannt:

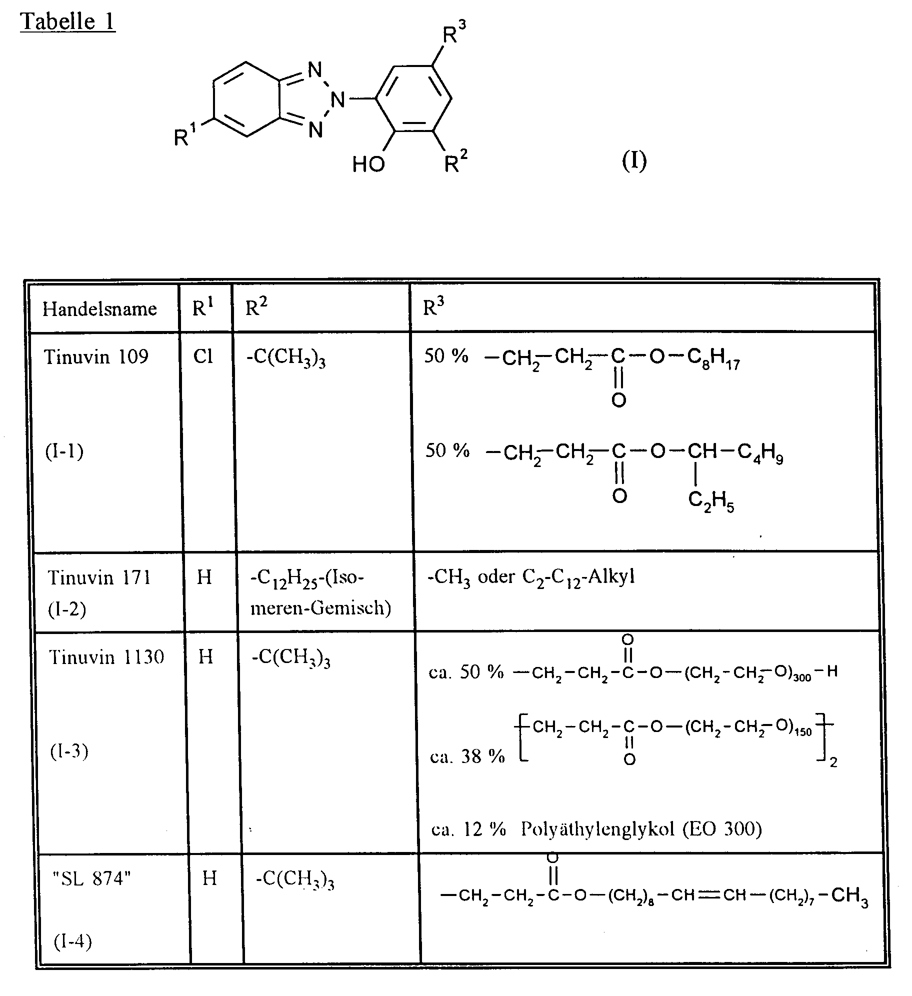

Als Beispiel für eine Verbindung der Formel (II) sei 2-Hydroxy-4-methoxybenzophenon der Formel 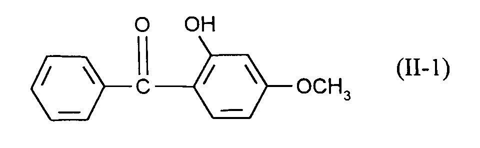 genannt.

Als Beispiel für ein Zimtsäure-Derivat der Formel (IV-c) sei 2-(2-Ethyl-hexyl)-2-cyano-3,3-diphenyl-2-propenoat der Formel 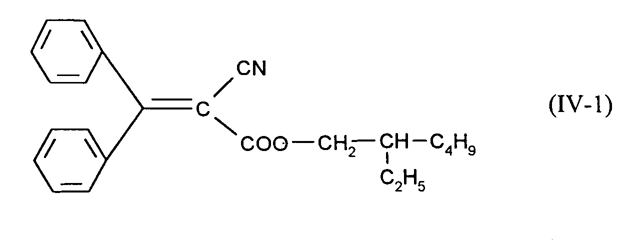 genannt.

Als Polymere, die in den erfindungsgemäßen Mitteln enthalten sind, kommen alle üblichen, in Wasser löslichen oder dispergierbaren Polymerisate oder Copolymerisate in Frage, die nach der Applikation der Mittel beim Trocknen zu einer schwammartigen, porösen Matrix verfilmen. Vorzugsweise in Betracht kommen Polymere, die durch anionische oder nichtionische Polymerisation von geeigneten Monomeren, zum Beispiel durch Emulsionspolymerisation oder Perlpolymerisation mit Hilfe von Radikalbildnern oder anderen Initiatorsystemen synthetisch zugänglich sind. Vorzugsweise einsetzbar sind auch Polymerisate auf Basis von Naturkautschuk-Latices.

Als Beispiele für besonders bevorzugte Polymere seien die folgenden Substanzen genannt:
Polyvinylacetat (Mowilith®), Polyvinylalkohole mit unterschiedlichem Verseifungsgrad (Mowiol®), Polyvinylpyrrolidone (Lewiskol K®, Agrimer®), Polyacrylate (Carbopol®), in Wasser lösliche oder dispergierbare Lacksystem-Bindemittel auf Acrylat-, Polyol- oder Polyester-Basis (Desmophen®, Roskydal®, Bayhydrol®), außerdem Copolymerisate aus zwei oder mehreren Monomeren wie Acrylsäure, Methacrylsäure, Itaconsäure, Maleinsäure, Fumarsäure, Maleinsäureanhydrid, Vinylpyrrolidon, ethylenisch ungesättigten Monomeren, wie Ethylen, Butadien, Isopren, Chloropren, Styrol, Divinylbenzol, α-Methylstyrol oder p-Methylstyrol, ferner Vinylhalogeniden, wie Vinylchlorid und Vinylidenchlorid, weiterhin Vinylestern, wie Vinylacetat, Vinylpropionat oder Vinylstearat, außerdem Vinylmethylketon oder Ester der Arylsäure oder Methacrylsäure mit einwertigen Alkoholen oder Polyolen, wie Methylacrylat, Methylmethacrylat, Ethylacrylat, Ethylenmethacrylat, Laurylacrylat, Laurylmethacrylat, Decylacrylat, N,N-Dimethylamino-ethylmethacrylat, 2-Hydroxyethylmethacrylat, 2-Hydroxypropylmethacrylat oder Glycidylmethacrylat, ferner Diethylestern oder Halbestern ungesättigter Dicarbonsäuren, weiterhin (Meth)acrylamido-N-methylolmethylether, Amiden oder Nitrilen, wie Acrylamid, Methacrylamid, N-Methylol(meth)acrylamid, Acrylnitril, Methacrylnitril, darüber hinaus N-substituierten Maleinimiden und Ethern, wie Vinylbutylether, Vinylisobutylether oder Vinylphenylether.

Die Polymere bilden beim Abtrocknen der Formulierungen eine in Wasser nicht oder nur schwer lösliche beziehungsweise schwer dispergierbare Matrix. Vorzugsweise werden Polymerisate eingesetzt, die eine niedrige Glasübergangstemperatur besitzen, insbesondere solche Stoffe, bei denen die Glasübergangstemperatur unterhalb von 50°C liegt.

Die erfindungsgemäßen Mittel enthalten eine oder mehrere oberflächenaktive Substanzen. In Frage kommen dabei alle oberflächenaktiven Substanzen, die üblicherweise bei der Herstellung von Pflanzenbehandlungsmitteln verwendet werden. Vorzugsweise in Betracht kommen nicht-ionogene und anionische Emulgatoren, wie Polyoxyethylen-Fettsäure-Ester, Polyoxyethylen-Fettalkohol-Ether, Alkylaryl-Polyglykol-Ether, Fettaminethoxylate, Alkylsulfonate, Alkylsulfate, Alkylarylsulfonate, Arylsulfate und Silicontenside. Beispiele für derartige oberflächenaktive Substanzen sind in Mc Cutcheon's "Emulsifiers and Detergents" 1982 North America Edit, MC Publishing Co., 1'75 Rock Road, Glen Rock, NJ 07 452, USA, aufgeführt.

Als Zusatzstoffe, die in den erfindungsgemäßen Mitteln vorhanden sein können, kommen alle diejenigen Substanzen in Frage, die üblicherweise in Pflanzenbehandlungsmitteln als Additive einsetzbar sind. Hierzu gehören Farbstoffe, Antoxidantien, Verdicker, Füllstoffe, Kältestabilisatoren und Lösungsmittel.

Als Farbstoffe kommen lösliche Farbstoffe oder wenig lösliche Farbpigmente in Betracht, wie beispielsweise Titandioxid, Farbruss oder Zinkoxid.

Als Antoxidantien kommen alle üblicherweise für diesen Zweck in Pflanzenbehandlungsmitteln einsetzbaren Stoffe in Frage. Bevorzugt sind sterisch gehinderte Phenole und alkylsubstituierte Hydroxyanisole und Hydroxytoluole.

Als Verdicker kommen alle üblicherweise für diesen Zweck in Pflanzenbehandlungsmitteln einsetzbaren Stoffe in Betracht. Vorzugsweise in Frage kommen organische Polymere, wie teilweise oder vollständig neutralisierte Polyacrylsäuren (Carbopol®), Polyethylenglykole (Polyox®), Polyvinylalkohole und nicht-ionisch oder ionisch modifizierte Zellulosen (Tylose®), thixotrope Verdickungsmittel auf Xanthan-Basis (Kelzan®), und außerdem anorganisch disperse Verdicker, wie gefällte oder pyrogene Kieselsäuren, Kaoline, Bentonite und Aluminium-/Silizium-Mischoxide.

Als Kältestabilisatoren kommen alle üblicherweise für diesen Zweck in Pflanzenbehandlungsmitteln einsetzbaren Stoffe in Betracht. Vorzugsweise in Frage kommen Harnstoff, Glycerin oder Propylenglykol.

Als Füllstoffe kommen wiederum alle üblicherweise für diesen Zweck in Pflanzenbehandlungsmitteln einsetzbaren inerten Materialien in Betracht. Vorzugsweise in Frage kommen Gesteinsmehle, Calciumcarbonat, Quarzmehl und Aluminium-/Silizium-Mischoxide oder -hydroxide.

Als Lösungsmittel kommen alle üblicherweise für diesen Zweck in Pflanzenbehandlungsmitteln einsetzbaren inerten, organischen Solventien in Betracht. Bevorzugt sind Glykole wie Propylenglykol und Polyethylenglykole mit unterschiedlichem Molekulargewicht; Ketone wie Methylisobutyl- und Methylisopropylketon sowie Cyclohexanon; Amide wie Dimethyl- oder Diethylformamid; N,N-dialkylierte Carbonsäureamide (z.B. Hallcomid®); Alkyllactame wie substituierte Pyrrolidone (z.B. N-Methylpyrrolidon und Surfadone®) und Caprolactame (z.B. Azone®); Kohlenwasserstoffe, n-Paraffine sowie Isoparaffine mit unterschiedlichen Siedebereichen, wie sie beispielsweise unter den Handelsnamen Exxol®, Norpar® und Isopar® erhältlich sind; aromatische Kohlenwassserstoffe wie Xylol sowie aromatische Destillationsschnitte (z.B. Solvesso®); Ester wie Propylenglykol-monomethylether-acetat, Adipinsäure-dibutylester und Phthalsäure-di-n-butylester; Ether wie Propylenglykolmethyl- oder butylether; Alkohole wie Ethanol, n- und i-Propanol, n- und i-Butanol, n- und i-Amylalkohol, Benzylalkohol, Tetrahydrofurfurylalkohol, 1-Methoxy-2-Propanol sowie höhere Alkohole und ferner Dimethylsulfoxid, Dioxan und Tetrahydrofuran. Die Lösungsmittel sind als Einzelkomponenten oder als Gemische einsetzbar. Besonders bevorzugt sind solche, die mit dem UV-Stabilisator mischbar und nicht übermäßig flüchtig sind.

Die Konzentrationen an den einzelnen Komponenten können in den erfindungsgemäßen Mitteln innerhalb eines größeren Bereiches variiert werden. So liegen die Konzentrationen, nach Abzug des in den erfindungsgemäßen Mitteln enthaltenen Wassers,
- an pestiziden Wirkstoffen im allgemeinen zwischen 0,1 und 10 Gew.-%, vorzugsweise zwischen 1 und 4 Gew.-%,
- an Signalsubstanzen im allgemeinen zwischen 0,01 und 1 Gew.-%, vorzugsweise 0,05 und 0,3 Gew.-%,
- an UV-Absorbern im allgemeinen zwischen 10 und 80 Gew.-%, vorzugsweise zwischen 40 und 70 Gew.-%,
- an Polymeren im allgemeinen zwischen 10 und 90 Gew.-%, vorzugsweise zwischen 25 und 75 Gew.-%,
- an oberflächenaktiven Substanzen im allgemeinen zwischen 0,1 und 4 Gew.-%, vorzugsweise zwischen 0,2 und 2 Gew.-% und
- an Zusatzstoffen im allgemeinen zwischen 0 und 50 Gew.-%, vorzugsweise zwischen 0 und 25 Gew.-%.

Im übrigen enthalten die erfindungsgemäßen Mittel auch Wasser. Der Wassergehalt ist vor dem Trocknen innerhalb eines größeren Bereiches variabel. Er liegt im allgemeinen zwischen 50 und 90 Gew.-%.

Bei der Herstellung der erfindungsgemäßen Mittel geht man im allgemeinen so vor, daß man zunächst durch Lösen oder Dispergieren von mindestens einem pestiziden Wirkstoff und mindestens einer Signalsubstanz in mindestens einem flüssigen UV-Absorber unter Rühren bei Temperaturen zwischen 20°C und 50°C, vorzugsweise bei Raumtemperatur, eine Vormischung herstellt und gegebenenfalls Zusatzstoffe hinzufügt. Danach wird die Vormischung unter Rühren bei Temperaturen zwischen 20°C und 50°C, vorzugsweise bei Raumtemperatur, in eine Lösung von mindestens einer oberflächenaktiven Substanz in Wasser dispergiert. Das Dispergieren wird so durchgeführt, daß sich eine Öl-in-Wasser-Emulsion bildet, in der die mittlere Teilchengröße im allgemeinen zwischen 0,5 und 50 µm, vorzugsweise zwischen 1 und 20 µm liegt. Die entstehende Emulsion wird anschließend unter Rühren bei Temperaturen zwischen 20°C und 50°C, vorzugsweise bei Raumtemperatur, mit einer Lösung bzw. Dispersion mindestens eines Polymers in Wasser sowie gegebenenfalls mit Zusatzstoffen versetzt. Bei der Herstellung der erfindungsgemäßen Mittel kann man jedoch auch in anderer Weise vorgehen. Prinzipiell ist es möglich, die Bestandteile in beliebiger Reihenfolge zu vermischen. Zur Herstellung der erfindungsgemäßen Mittel kommen alle dafür üblichen Rühr- und Mischapparate in Betracht.

Die erfindungsgemäßen Mittel fallen bei der Herstellung in flüssigem oder viskosem Zustand an. Nach der Ausbringung trocknen die viskosen Massen ab und bilden einen nicht fließfähigen und nicht klebenden, gut haftenden Belag, der Schwammstruktur aufweist oder als poröser Film vorliegt. Der getrocknete Belag besitzt feste bis gummiartige Konsistenz.

Die erfindungsgemäßen Mittel eignen sich sehr gut zur Bekämpfung schädlicher Insekten und unerwünschter Vertreter der Ordnung Acarina, die in der Landwirtschaft, in Forsten und im Gartenbau einschließlich Weinbau vorkommen. So lassen sie sich einsetzen gegen nachstehend genannte Schädlinge.

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana,
Leucophaea maderae, Blattella germanica, Acheta domesticus, Gryllotalpa spp.,
Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp.,
Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Bruchidius obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die erfindungsgemäßen Mittel können unter Verwendung konventioneller Vorrichtungen, wie sie dein Fachmann bekannt sind, in der Form von Tröpfchen, tropfenähnlichen Bereichen oder dünnen begrenzten Schichten auf die zu behandelnden Pflanzen oder Kulturflächen ausgebracht werden. Besonders geeignet für die Behandlung von Stammobst oder Weinreben ist ein Verfahren, bei dem die erfindungsgemäßen Formulierungen mit Hilfe von Dosierspendern, Pipetten oder Spritzen in definierter Menge an den Stamm der Pflanzen appliziert werden, wobei die Applikationsvorrichtungen zur flächigen Verteilung der Mittel über einen größeren Bereich auch mit einer Streichvorrichtung oder mit einer flächigen Düse versehen sein können. Es ist auch möglich, die erfindungsgemäßen Formulierungen auf einer festen Unterlage auszustreichen, dort abhärten zu lassen, die entstehenden festen Beläge zu zerschneiden und die einzelnen Stücke an den jeweils gewünschten Stellen zu befestigen.

Die Mengen, in der die erfindungsgemäßen Mittel ausgebracht werden, können innerhalb eines größeren Bereiches variiert werden. Sie liegen im allgemeinen in der Größenordnung, die üblicherweise für den Einsatz von "Attract-and-kill-Formulierungen" gewählt wird.

Die Herstellung und die Verwendung erfindungsgemäßer Mittel wird durch die folgenden Beispiele veranschaulicht.

### Herstellungsbeispiele

### Beispiel 1

5 g Cyfluthrin und 0,164 g E,E-8,10-Dodecandienol werden unter Rühren bei Raumtemperatur in 94,84 g des flüssigen Benztriazols der Formel 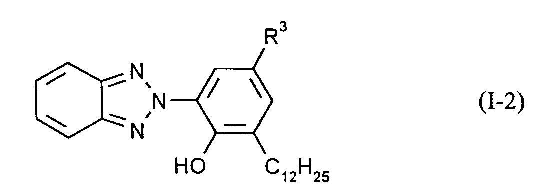 R³ = CH₃ oder C₂-C₁₂-Alkyl
gelöst. Diese Vormischung wird mit Hilfe eines Rotor-Stator-Dispergierstabes bei Raumtemperatur in einer Lösung von 2,5 g ethoxyliertem Nonylphenol mit einem mittleren Ethoxylierungsgrad von 10 in 97,5 g entmineralisiertem Wasser emulgiert. Man versetzt diese Emulsion bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser. Die dabei entstehende viskose Masse wird auf einer Kunststoffunterlage zu einem Belag mit einer Schichtdicke von 1 mm ausgestrichen und 16 Stunden bei Raumtemperatur stehen gelassen. Es bildet sich eine feste, gummiartige Schicht, die unter dem Mikroskop eine schwammartige, poröse Struktur aufweist.

### Beispiel 2

250 g der im Beispiel 1 beschriebenen Emulsion werden bei Raumtemperatur unter Rühren zunächst mit 100 g einer 60 Gew.-%igen Dispersion von Polyvinylacetat in Wasser und dann mit 100 g einer 2 Gew.-%igen Lösung eines Heteropolysaccharids auf Xanthan-Basis (Kelzan S®) in Wasser versetzt. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Beispiel 3

200 g der im Beispiel 1 beschriebenen Emulsion werden bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser versetzt. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Beispiel 4

150 g der im Beispiel 1 beschriebenen Emulsion werden bei Raumtemperatur unter Rühren zunächst mit 100 g einer 60 Gew.-%igen Dispersion von Polyvinylacetat in Wasser und dann mit 60 g einer 2 Gew.-%igen Lösung eines Heteropolysaccharids auf Xanthan-Basis (Kelzan S®) in Wasser versetzt. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Beispiel 5

100 g der im Beispiel 1 beschriebenen Emulsion werden bei Raumtemperatur unter Rühren zunächst mit 100 g einer 60 Gew.-%igen Dispersion von Polyvinylacetat in Wasser und dann mit 50 g einer 2 Gew.-%igen Lösung eines Heteropolysaccharids auf Xanthan-Basis (Kelzan S®) in Wasser versetzt. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Beispiel 6

5 g β-Cyfluthrin werden unter Rühren bei Raumtemperatur in 95 g des flüssigen Benztriazols der Formel (I-2) (vgl. Beispiel 1) gelöst. Diese Vormischung wird mit Hilfe eines Rotor-Stator-Dispergierstabes bei Raumtemperatur in einer Lösung von 2,5 g ethoxyliertem Nonylphenol mit einem mittleren Ethoxylierungsgrad von 10 in 97,5 g entmineralisiertem Wasser emulgiert. Man versetzt diese Emulsion bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Beispiel 7

5 g Cyfluthrin und 0,041 g E,E,-8,10-Dodecandienol werden unter Rühren bei Raumtemperatur in 94,96 g des flüssigen Benztriazols (I-2) (vgl. Beispiel 1) gelöst. Diese Vormischung wird mit Hilfe eines Rotor-Stator-Dispergierstabes bei Raumtemperatur in einer Lösung von 2,5 g ethoxyliertem Nonylphenol mit einem mittleren Ethoxylierungsgrad von 10 in 97,5 g entmineralisiertem Wasser emulgiert. Man versetzt diese Emulsion bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser. Dabei entsteht eine viskose Masse.

### Beispiel 8

5 g Cyfluthrin und 0,0041 g E,E,-8,10-Dodecandienol werden unter Rühren bei Raumtemperatur in 95,00 g des flüssigen Benztriazols (I-2) (vgl. Beispiel 1) gelöst. Diese Vormischung wird mit Hilfe eines Rotor-Stator-Dispergierstabes bei Raumtemperatur in einer Lösung von 2,5 g ethoxyliertem Nonylphenol mit einem mittleren Ethoxylierungsgrad von 10 in 97,5 g entmineralisiertem Wasser emulgiert. Man versetzt diese Emulsion bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser. Dabei entsteht eine viskose Masse.

### Vergleichsbeispiel 1 (EP-A 0 376 888)

Durch inniges Vermischen von
- 3,65 g: Cyfluthrin,
- 0,1 g: E,E-8,10-Dodecandienol,
- 70,0 g: des flüssigen Benztriazols der Formel (I-2) (vgl. Beispiel 1),
- 2,75 g: Aerosil COK 84 (feinteiliges SiO₂/Al₂O₃-Pulver; 84:16 Gew.-%),
- 3,52 g: Farbrußpulver Spezialschwarz S (Dichte 1,8 bis 1,9 g/cm³; Teilchengröße 20 nm, Oberfläche 240 m²/g) und
- 2,71 g: Sudanschwarz R
bei Raumtemperatur wird eine viskose Masse hergestellt. 4 g dieser Formulierung werden in eine Petrischale mit einem Durchmesser von 9 cm gegossen und gleichmäßig verteilt. Auch nach mehrtägigem Stehen bei Raumtemperatur war die Formulierung noch viskos.

### Vergleichsbeispiel 2

In der im Vergleichsbeispiel 1 beschriebenen Weise wird eine Formulierung hergestellt, in der jedoch 3,65 β-Cyfluthrin statt des Cyfluthrins enthalten sind. Man erhält auch in diesem Fall eine viskose Masse. 4 g dieser Formulierung werden in eine Petrischale mit einem Durchmesser von 9 cm gegossen und gleichmäßig verteilt. Auch nach mehrtägigem Stehen bei Raumtemperatur blieb die Formulierung von viskoser Konsistenz.

### Vergleichsbeispiel 3

5 g β-Cyfluthrin in Pulverform werden mit Hilfe eines Rotor-Stator-Dispergierstabes bei Raumtemperatur in 95 g einer 0,2 Gew.-%igen Lösung von ethoxyliertem Nonylphenol mit einem mittleren Ethoxylierungsgrad von 10 in entmineralisiertem Wasser dispergiert. Man versetzt diese Dispersion bei Raumtemperatur unter Rühren zunächst mit 100 g einer 60 Gew.-%igen Dispersion von Polyvinylacetat in Wasser und dann mit 75 g einer 2 Gew.-%igen Lösung eines Heteropolysaccharids auf Xanthan-Basis (Kelzan S) in Wasser. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Vergleichsbeispiel 4

10 g eines wäßrigen Suspensionskonzentrates, das 5 g β-Cyfluthrin in feingemahlener Form enthält, werden mit Hilfe eines Rotor-Stator-Dispergierstabes bei Raumtemperatur in 90 g einer 0,2 Gew.-%igen Lösung von ethoxylierten Nonylphenol mit einem mittleren Ethoxylierungsgrad von 10 in entmineralisiertem Wasser dispergiert. Man versetzt diese Dispersion bei Raumtemperatur unter Rühren zunächst mit 100 g einer 60 Gew.-%igen Dispersion von Polyvinylacetat in Wasser und dann mit 75 g einer 2 Gew.-%igen Lösung eines Heteropolysaccharids auf Xanthan-Basis (Kelzan S) in Wasser. Dabei entsteht eine viskose Masse. 4 g dieser Formulierung werden in eine Petrischale mit einem Durchmesser von 9 cm gegossen und gleichmäßig verteilt. Nach 16-stündigem Trocknen bei Raumtemperatur hat sich eine feste, gummiartige Schicht gebildet.

### Vergleichsbeispiel 5

5 g Cyfluthrin werden unter Rühren bei Raumtemperatur in 95,00 des flüssigen Benztriazols (I-2) (vgl. Beispiel 1) gelöst. Diese Vormischung wird mit Hilfe eines Rotor-Stator-Dispergierstabes bei Raumtemperatur in einer Lösung aus 2,5 g ethoxyliertem Nonylphenyl mit einem mittlerem Ethoxylierungsgrad von 10 in 97,5 g entmineralisiertem Wasser emulgiert. Man versetzt diese Emulsion bei Raumtemperatur unter Rühren zunächst mit 100 g einer 60 Gew.-%igen Dispersion von Polyvinylacetat in Wasser und dann mit 80 g einer 2 Gew.-%igen Lösung eines Heteropolysaccharids auf Xanthan-Basis (Kelzan S®) in Wasser. Dabei entsteht eine viskose Masse.

### Vergleichsbeispiel 6

Durch inniges Vermischen von
- 3,65 g: Cyfluthrin,
- 70,0 g: des flüssigen Benztriazols der Formel (I-2) (vgl. Beispiel 1),
- 2,75 g: Aerosil COK 84 (feinteiliges SiO₂/Al₂O₃-Pulver; 84:16 Gew.-%),
- 3,52 g: Farbrußpulver Spezialschwarz S (Dichte 1,8 bis 1,9 g/cm³; Teilchengröße 20 nm, Oberfläche 240 m²/g) und
- 2,71 g: Sudanschwarz R
bei Raumtemperatur wird eine viskose Masse hergestellt.

### Verwendungsbeispiele

### Beispiel A

Zur Prüfung auf insektizide Wirksamkeit werden jeweils 10 männliche Tiere des Apfelwicklers (Cydia Pomonella) auf Petrischalen von 9 cm Durchmesser gesetzt, in die jeweils 16 Stunden zuvor 4 g der jeweiligen Formulierung gegeben wurden. Nach einer Kontaktzeit von 10 Minuten werden die Falter wieder entfernt. Anschließend wird die Morbidität der Falter in Abhängigkeit von der Zeit ermittelt. Im morbiden Zustand liegen die Falter regungslos am Boden und zeigen unkoordiniertes Zucken der Glieder, der Antennen und des Unterleibes. Zur quantitativen Bewertung der insektiziden Wirkung wird die Morbidität als Funktion der Zeit in einer Grafik aufgetragen. Durch Interpolation wird daraus die Zeitspanne ermittelt, in der 50 % der Falter morbide Symptome zeigen. Diese Zeit wird in Minuten bestimmt und als t₅₀ bezeichnet. Sie dient als Maß für die insektizide Wirksamkeit des jeweiligen Präparates. Je kürzer der t₅₀-Wert ist, desto effektiver wirkt die Formulierung.

Die Versuchergebnisse gehen aus der folgenden Tabelle hervor.

**Tabelle A**

| Cydia Pomonella / Insektizide Wirksamkeit | |
|---|---|
| Präparat | t₅₀ (min) |
| Erfindungsgemäße Beispiele: | |
| 2 | 17 |
| 3 | 20 |
| 4 | 23 |
| 5 | 21 |
| 6 | 17 |

| Vergleichsbeispiele | |
|---|---|
| 1 | 15 |
| 2 | 37 |
| 3 | 240 |
| 4 | 78 |

### Beispiel B

Zur Prüfung auf insektizide Wirksameit werden jeweils 10 männliche Tiere der Amerikanischen Tabak-Knospeneule (Heliothis Virescens) auf Petrischalen von 9 cm Durchmesser gesetzt, in die jeweils 16 Stunden zuvor 4 g jeweiligen Formulierung gegeben wurden. Nach einer Kontaktzeit von 10 Minuten werden die Falter wieder entfernt. Anschließend wird die Morbidität der Falter in Abhängigkeit von der Zeit ermittelt. Im morbiden Zustand liegen die Falter regungslos am Boden und zeigen unkoordiniertes Zucken der Glieder, der Antennen und des Unterleibes. Zur quantitativen Bewertung der insektiziden Wirkung wird die Morbidität als Funktion der Zeit in einer Grafik aufgetragen. Durch Interpolation wird daraus die Zeitspanne ermittelt, in der 50 % der Falter morbide Symptome zeigen. Diese Zeit wird in Minuten bestimmt und als t₅₀ bezeichnet. Sie dient als Maß für die insektizide Wirksamkeit des jeweiligen Präparates. Je kürzer der t₅₀-Wert ist, desto effektiver wirkt die Formulierung.

Die Versuchsergebnisse gehen aus der folgenden Tabelle hervor.

**Tabelle B**

| Heliothis Virescens / Insektizide Wirksamkeit | |
|---|---|
| Präparat | t₅₀ (min) |
| Erfindungsgemäßes Beispiel: | |
| 6 | 36¹⁾ |

| Vergleichsbeispiele | |
|---|---|
| 2 | 42¹⁾ |
| 3 | - ²⁾ |
| 4 | - ²⁾ |

| | |
|---|---|
| ¹⁾ Nach 24 Stunden ware alle Test-Tiere tot oder zeigten morbide Symptome. | |
| ²⁾ Ein t₅₀-Wert konnte nicht ermittelt werden. Nach 24 Stunden zeigten 90 % der Test-Tiere keinerlei Anzeichen einer Vergiftung. | |

### Beispiel C

### Zur Bewertung des Kontaminationspotentials von Attract-and-Kill-Formulierungen werden

a) 0,5 der im Beispiel 1 beschriebenen Formulierung bzw.
b) 0,15 der im Vergleichsbeispiel 1 beschriebenen Formulierung
jeweils auf eine Glasplatte ausgebracht und über eine Fläche von etwa 10 cm² gleichmäßig verteilt. In beiden Fällen entspricht dieses eines ausgebrachten Menge an UV-Absorber der Formel (I-2) (vgl. Beispiel 1) von 125 mg. Man läßt 24 Stunden trocknen, bedeckt die Präparate dann mit je einem Stück Stoff und preßt 30 Sekunden mit einem flächigen Gewicht von 1 kg an. Danach werden die kontaminierten Stoffstücke viermal mit je 25 ml N-Methylpyrrolidon extrahiert. In den gesammelten Extrakten wird der Gehalt an UV-Absorber spektrophotometrisch bestimmt und in Prozent der in dem Präparat insgesamt enthaltenen Menge an UV-Absorber berechnet.

Der auf dem Stoff vorhandene Anteil an UV-Absorber beträgt im Falle der Formulierung gemäß

| | |
|---|---|
| - Beispiel 1: | 4,5 % |
| - Vergleichsbeispiel 1: | 73 % |

Das bedeutet, daß das Kontaminationspotential der Formulierung gemäß Vergleichsbeispiel 1 um mehr als den Faktor 16 höher ist als dasjenige der Formulierung gemäß Beispiel 1.

### Beispiel D

### Bestimmung der anlockenden Wirkung von Attract-and-kill-Formulierungen

In einem Windkanal mit einer Länge von 1,5 m und einem quadratischen Querschnitt mit 0,4 m Kantenlänge wurde Luft mit einer Geschwindigkeit von 0,4 m/s durchgeleitet. Am Anfang des Kanals (Lufteinleitseite) wurden zwei Pappbecher mit dem Boden gegen die Strömungsrichtung symmetrisch in den Windkanal eingehängt. Der Boden der Becher war bis auf einen schmalen Steg in der Mitte ausgeschnitten, sodaß die Luft die Becher weitgehend ungehindert durchströmen konnte. Die Innenseite der Becher wurde mit Insektenleim ausgestrichen. Auf den verbliebenden Steg eines Bechers wurde zentrisch ein Tropfen, (20 mg) der zu prüfenden Formulierung angebracht. Der andere Becher wurde mit einer vergleichbaren Formulierung, die jedoch kein Pheromom enthielt (Vergleichsbeispiel 5 oder 6), präpariert. Je 20 männliche Tiere des Apfelwicklers (Cydia Pomonella) im Alter von 2 Tagen wurden am Ende des Kanals freigesetzt. Nach 23 Stunden wurde die Zahl der in den einzelnen Bechern gefangenen Tiere ermittelt und als Maß für die Lockwirkung (Fangrate) in % ausgedrückt. Die Ergebnisse gehen aus der folgenden Tabelle hervor.

**Tabelle D**

| Anlockende Wirkung von Attract-and-kill-Formulierungen | | |
|---|---|---|
| Präparat | Fangrate mit Pheromom (%) | Fangrate ohne Pheromom (%) |
| Erfindungsgemäße Beispiele | | |
| 7 | 51 | 12* |
| 8 | 82 | 5* |

| Vergleichsbeispiel | | |
|---|---|---|
| 1 | 51 | 20** |

| | | |
|---|---|---|
| * Vergleichsbeispiel 5 | | |
| ** Vergleichsbeispiel 6 | | |

### Beispiel E

### Bestimmung der anlockenden Wirkung von Attract-and-kill-Formulierungen

Je ein Apfelbäumchen mit einer mittleren Größe von 30 cm wurde an drei Stellen (Stamm, auf der Oberseite eines Blattes und an der Unterseite eines Blattes) mit einem etwa 50 Mikroliter großen Tropfen der zu prüfenden Formulierung versehen. Neben den pheromonhaltigen Formulierungen gemäß Beispiel 7 und Vergleichsbeispiel 1 wurde auch die Pheromon-freie Vergleichsformulierang gemäß Beispiel 5 geprüft.

In einem Kontroll-Versuch wurde keine Formulierung ausgebracht.

Die einzelnen Bäumchen wurden zusammen mit je 15 Puppen des Apfelwicklers (Cydia Pomonella) in Käfige aus Gaze eingeschlossen. Aus den Puppen entwickelten sich im Laufe einiger Tage adulte Tiere. Die Käfige wurden in einem Windkanal (Abmessungen 3 x 1, 5 x 1 m) positioniert. Im Laufe des achttägigen Versuchs wurde mit einer Geschwindigkeit von 0,1 m/s Luft durch den Windkanal geleitet. Am Ende des Versuchs wurde als Maß für die Attract-and-kill-Wirkung der Formulierungen die Zahl der toten Tiere in den einzelnen Käfigen bestimmt und als Maß für die Mortalität in % ausgedruckt. Die Versuchsergebnisse gehen aus der folgenden Tabelle hervor.

**Tabelle E**

| Anlockende Wirkung von Attract-and-kill-Formulierungen | |
|---|---|
| Präparat | Mortalität (%) |
| Kontrolle | 12 |
| - | |

| Erfindungsgemäßes Beispiel | |
|---|---|
| 7 | 79 |

| Vergleichsbeispiel | |
|---|---|
| 1 | 58 |
| 5 | 25 |

## Patentansprüche

1. Schädlingsbekämpfungsmittel, dadurch gekennzeichnet, daß sie
- mindestens einen pestiziden Wirkstoff,
- mindestens eine Signalsubstanz,
- mindestens einen flüssigen, mit Wasser nur wenig mischbaren UV-Absorber,
- mindestens ein aushärtendes Polymer, das nach dem Trocknen der Formulierung Schwammstruktur aufweist oder einen porösen Film bildet,
- mindestens eine oberflächenaktive Substanz und
- gegebenenfalls Zusatzstoffe
enthalten und nach der Applikation trocknen und aushärten.

2. Schädlingsbekämpfungsmittel gemäß Anspruch 1, dadurch gekennzeichnet, daß der Gehalt, nach Abzug des enthaltenen Wassers, an
- pestizidem Wirkstoff bzw. an Gemisch pestizider Wirkstoffe zwischen 0,1 und 10 Gew.-% liegt,
- Signalsubstanz bzw. Signalsubstanz-Gemisch zwischen 0,01 und 1 Gew.-% liegt,
- UV-Absorber bzw. UV-Absorber-Gemisch zwischen 10 und 80 Gew.-% liegt,
- Polymer bzw. Polymergemisch zwischen 10 und 90 Gew.-% liegt,
- oberflächenaktiver Substanz bzw. an Gemisch oberflächenaktiver Substanzen zwischen 0,1 und 4 Gew.-% liegt und
- an Zusatzstoffen zwischen 0 und 50 Gew.-% liegt.

3. Schädlingsbekämpfungsmittel gemäß Anspruch 1, dadurch gekennzeichnet, daß ein Pyrethroid als pestizider Wirkstoff enthalten ist.

4. Schädlingsbekämpfungsmittel gemäß Anspruch 1, dadurch gekennzeichnet, daß Cyfluthrin als pestizider Wirkstoff enthalten ist.

5. Schädlingsbekämpfungsmittel gemäß Anspruch 1, dadurch gekennzeichnet, daß β-Cyfluthrin oder Transfluthrin als insektizider Wirkstoff enthalten ist.

6. Schädlingsbekämpfungsmittel gemäß Anspruch 1, dadurch gekennzeichnet, daß E,E-8,10-Dodecandienol oder Z-11-Tetradecenyl-acetat als Signalsubstanz enthalten ist.

7. Schädlingsbekämpfungsmittel gemäß Anspruch 1, dadurch gekennzeichnet, daß Benztriazol der Formel 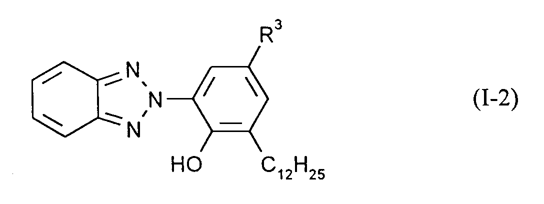 in welcher
R³ für Methyl oder C₂-C₁₂-Alkyl steht,
als UV-Absorber enthalten ist.

8. Schädlingsbekämpfungsmittel gemäß Anspruch 1, dadurch gekennzeichnet, daß
- 2-Hydroxy-4-methoxy-benzophenon der Formel 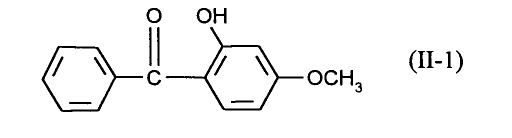 und/oder
- 2-(2-Ethyl-hexyl)-2-cyano-3,3-diphenyl-2-propenoat der Formel 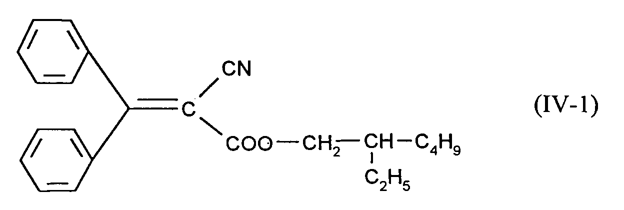 als UV-Absorber enthalten ist.

9. Verfahren zur Herstellung von Schädlingsbekämpfungsmitteln gemäß Anspruch 1, dadurch gekennzeichnet, daß man
a) mindestens einen pestiziden Wirkstoff, mindestens eine Signalsubstanz, mindestens einen flüssigen, mit Wasser nur wenig mischbaren UV-Absorber und gegebenenfalls Zusatzstoffe vermischt,
b) das dabei entstehende Gemisch in einer Lösung aus mindestens einer oberflächenaktiven Substanz und Wasser dispergiert und
c) die entstehende Emulsion mit einer Lösung oder Dispersion von mindestens einem aushärtenden Polymer, das nach dem Trocknen der Formulierung Schwammstruktur aufweist oder einen porösen Film bildet, in Wasser sowie gegebenenfalls mit Zusatzstoffen versetzt.

10. Verwendung von Mitteln gemäß Anspruch 1 zur Bekämpfung von schädlichen Insekten und unerwünschten Vertretern der Ordnung Acarina in der Landwirtschaft, der Forstwirtschaft und im Gartenbau.

## Claims

1. Pesticides, characterized in that they comprise
- at least one pesticidally active compound,
- at least one signal substance,
- at least one liquid UV absorber which is only sparingly miscible with water,
- at least one curable polymer which, after drying of the formulation, has a sponge-like structure or forms a porous film,
- at least one surfactant and
- if appropriate additives
and that they dry and cure after application.

2. Pesticides according to Claim 1, characterized in that, after taking into consideration the water present, the content of
- pesticidally active compound or of a mixture of pesticidally active compounds is between 0.1 and 10% by weight,
- signal substance or of a mixture of signal substances between 0.01 and 1% by weight,
- UV absorber or of a mixture of UV absorbers between 10 and 80% by weight,
- polymer or of a mixture of polymers between 10 and 90% by weight,
- surfactant or of a mixture of surfactants between 0.1 and 4% by weight,
- additives is between 0 and 50% by weight.

3. Pesticides according to Claim 1, characterized in that they comprise a pyrethroid as pesticidally active compound.

4. Pesticides according to Claim 1, characterized in that they comprise a cyfluthrin as pesticidally active compound.

5. Pesticides according to Claim 1, characterized in that they comprise a β-cyfluthrin or transfluthrin as insecticidally active compound.

6. Pesticides according to Claim 1, characterized in that they comprise E,E-8,10-dodecanedienol or Z-11-tetradecenyl acetate as signal substance.

7. Pesticides according to Claim 1, characterized in that they comprise benzotriazole of the formula 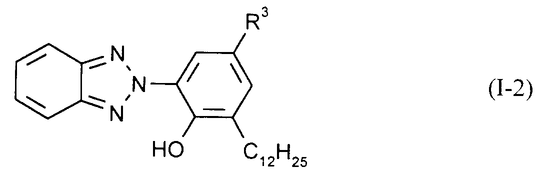 in which
R³ represents methyl or C₂-C₁₂-alkyl,
as UV absorber.

8. Pesticides according to Claim 1, characterized in that they comprise
- 2-hydroxy-4-methoxy-benzophenone, of the formula 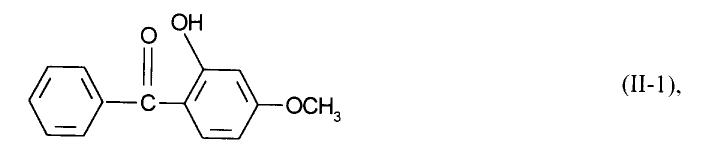 and/or
- 2-(2-ethyl-hexyl) 2-cyano-3,3-diphenyl-2-propenoate of the formula 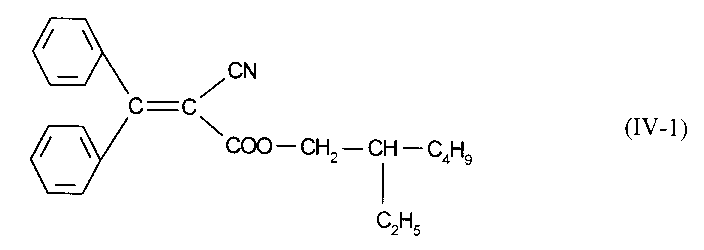 as UV absorber.

9. Process for the preparation of pesticides according to Claim 1 characterized in that
a) at least one pesticidally active compound, at least one signal substance, at least one liquid UV absorber which is only sparingly miscible with water and, if appropriate, additives are mixed,
b) the resulting mixture is dispersed in a solution of at least one surfactant and water and
c) the resulting emulsion is treated with an aqueous solution or dispersion of at least one curable polymer which, after drying of the formulation, has a sponge-like structure or forms a porous film, and, if appropriate additives.

10. Use of compositions according to Claim 1 for combating harmful insects and undesirable representatives of the order Acarina in agriculture, forestry and in horticulture.

## Revendications

1. Compositions pesticides, caractérisées en ce qu'elles contiennent
- au moins une substance active pesticide,
- au moins une substance-signal,
- au moins un absorbeur liquide de rayons UV, seulement peu miscible à l'eau,
- au moins un polymère durcissant qui présente une structure spongieuse ou qui forme un film poreux après le séchage de la formulation,
- au moins une substance tensio-active et
- le cas échéant des additifs,
et elles sèchent et durcissent après l'application.

2. Compositions pesticides suivant la revendication 1, caractérisées en ce que, déduction faite de l'eau qu'elles contiennent,
- la teneur en substance active pesticide ou en mélange de substances actives pesticides se situe entre 0,1 et 10 % en poids,
- la teneur en substance-signal ou en mélange de substances-signal se situe entre 0,01 et 1 % en poids,
- la teneur en absorbeur de rayons ultraviolets ou en mélange d'absorbeurs de rayons ultraviolets se situe entre 10 et 80 % en poids,
- la teneur en polymère ou en mélange de polymères se situe entre 10 et 90 % en poids,
- la teneur en substance tensio-active ou en mélange de substances tensio-actives se situe entre 0,1 et 4 % en poids, et
- la teneur en additifs se situe entre 0 et 50 % en poids.

3. Compositions pesticides suivant la revendication 1, caractérisées en ce qu'elles contiennent un pyréthroïde comme substance active pesticide.

4. Compositions pesticides suivant la revendication 1, caractérisées en ce qu'elles contiennent de la cyfluthrine comme substance active pesticide.

5. Compositions pesticides suivant la revendication 1, caractérisées en ce qu'elles contiennent de la β-cyfluthrine ou de la transfluthrine comme substance active insecticide.

6. Compositions pesticides suivant la revendication 1, caractérisées en ce qu'elles contiennent comme substance-signal du E,E-8,10-dodécanediénol ou de l'acétate de Z-11-tétradécényle.

7. Compositions pesticides suivant la revendication 1, caractérisées en ce qu'elles contiennent comme absorbeur de rayons ultraviolets un benzotriazole de formule 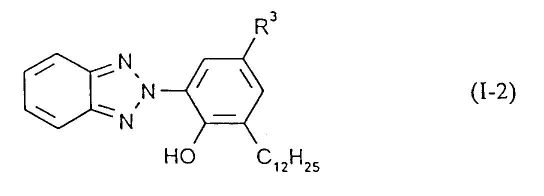 dans laquelle
R³ est un groupe méthyle ou un groupe alkyle en C₂ à C₁₂.

8. Compositions pesticides suivant la revendication 1, caractérisées en ce qu'elles contiennent comme absorbeurs de rayons ultraviolets
- de la 2-hydroxy-4-méthoxybenzophénone de formule 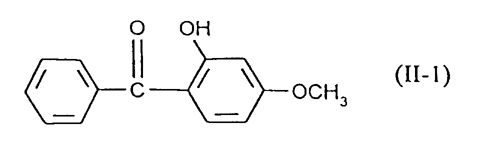 et/ou
- du 2-cyano-3,3-diphényl-2-propénoate de 2-(2-éthylhexyle) de formule

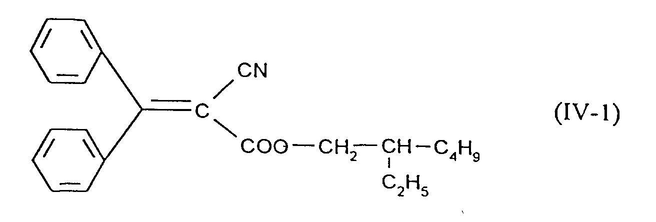

9. Procédé de production de compositions pesticides suivant la revendication 1, caractérisé en ce que
a) on mélange au moins une substance active pesticide, au moins une substance-signal, au moins un absorbeur liquide de rayons ultraviolets seulement peu miscible à l'eau et le cas échéant des additifs,
b) on disperse le mélange ainsi formé dans une solution d'au moins une substance tensioactive dans l'eau et
c) on ajoute à l'émulsion produite une solution ou dispersion dans l'eau d'au moins un polymère durcissant, qui présente une structure spongieuse ou forme un film poreux après séchage de la formulation, et le cas échéant des additifs.

10. Utilisation de compositions suivant la revendication 1 pour combattre des insectes parasites et des représentants indésirables de l'ordre des Acarina en agriculture, en sylviculture et en horticulture.
